# EUROPÄISCHE PATENTSCHRIFT

(11) **EP 0 705 730 B1**
(45) Veröffentlichungstag und Bekanntmachung des Hinweises auf die Patenterteilung: **07.06.2000**
(21) Anmeldenummer: 95114689.3
(22) Anmeldetag: 19.09.1995
(51) Int. Cl.: B60Q 1/14, F21V 7/16

(54) **Scheinwerfer für Abblendlicht und Fernlicht für Fahrzeuge**
Headlight with dipped and distance light for vehicle
Phare avec feux de route et codes pour véhicule

(30) Priorität: 04.10.1994 DE 4435507
(43) Veröffentlichungstag der Anmeldung: 10.04.1996
(73) Patentinhaber: ROBERT BOSCH GMBH, 70442 Stuttgart (DE)
(72) Erfinder: Daumueller, Hans, D-72411 Bodelshausen (DE); Dobler, Karl-Otto, D-72768 Reutlingen (DE); Neumann, Rainer, Dr. Dipl.-Phys., D-70195 Stuttgart (DE); Liedtke, Frieder, Dipl.-Ing. (FH), D-72581 Dettingen (DE); Streit, Lothar, Dipl.-Ing. (FH), D-72820 Sonnenbuehl (DE); Vent, Albert, Dipl.-Ing., D-72800 Eningen (DE); Boebel, Doris, Dipl.-Ing., D-70193 Stuttgart (DE)

(56) Entgegenhaltungen:
- EP-A- 0 220 068
- EP-A- 0 595 267
- US-A- 3 953 726
- US-A- 4 947 078

## Beschreibung

Die Erfindung geht aus von einem Scheinwerfer für Abblendlicht und Fernlicht für Fahrzeuge nach der Gattung des Anspruchs 1.

Ein solcher Scheinwerfer ist durch die EP-A-0595267 bekannt. Dieser Scheinwerfer weist einen Reflektor und eine Lichtquelle in Form einer Gasentladungslampe auf. Die Lichtquelle ist durch ein Stellelement zwischen einer Stellung für Abblendlicht und einer Stellung für Fernlicht in Richtung der optischen Achse des Reflektors und zusätzlich auch vertikal zur optischen Achse bewegbar. Beim Scheinwerfer gemäß diesem Dokument soll die Helldunkelgrenze dadurch erzeugt werden, daß durch den Reflektor von der Lichtquelle ausgesandtes Licht als ein Lichtbündel reflektiert wird, das durch die Form des Reflektors die Helldunkelgrenze aufweist. Bei Verwendung einer Gasentladungslampe als Lichtquelle, die gegenüber einer Glühlampe einen wesentlich höheren Lichtstrom aussendet, muß bei der Erzeugung des Abblendlichts besonders darauf geachtet werden, daß keine Blendung des Gegenverkehrs verursacht wird, wozu das Abblendlicht eine exakt eingestellte und deutlich ausgeprägte Helldunkelgenze aufweisen muß. Bei Verwendung einer Gasentladungslampe ist es wegen der zum Teil diffusen Lichtabgabe durch diese schwierig, eine exakt eingestellte und deutlich ausgeprägte Helldunkelgrenze des Abblendlichts zu erreichen.

Durch die EP-A-0220068 ist ein Scheinwerfer für Abblendlicht und Fernlicht für Fahrzeuge bekannt, der einen Reflektor und eine Lichtquelle in Form einer Gasentladungslampe aufweist, wobei der Reflektor zusammen mit der Lichtquelle bewegbar ist. Wie die Helldunkelgrenze des Abblendlichts erzeugt wird ist in diesem Dokument nicht angegeben.

### Vorteile der Erfindung

Der erfindungsgemäße Scheinwerfer mit den Merkmalen gemäß Anspruch 1 hat demgegenüber den Vorteil, daß durch die Abschirmvorrichtung sichergestellt ist, daß die Helldunkelgrenze des Abblendlichts die erforderliche Lage einnimmt und deutlich ausgeprägt ist, so daß sichergestellt ist, daß keine Blendung des Gegenverkehrs auftritt.

In den abhängigen Ansprüchen sind vorteilhafte Ausgestaltungen und Weiterbildungen des erfindungsgemäßen Scheinwerfers angegeben.

Eine einfache Bildung der Abschirmvorrichtung ist durch die Ausbildung gemäß Anspruch 2 erreicht. Durch die Ausbildung gemäß Anspruch 8 ist sichergestellt, daß sich die Lichtquelle in exakt festgelegten Stellungen für die Erzeugung des Abblendlichts und/oder des Fernlichts befindet. Das elastisch verformbare Zwischenglied gemäß Anspruch 9 stellt einerseits unabhängig von Fertigungstoleranzen die Anlage an den Anschlägen sicher und gewährleistet außerdem die Anlage an den Anschlägen auch bei eventuell auftretenden Erschütterungen. In den Ansprüchen 12 und 16 sind einfach aufgebaute und nur kleine Verstellwege zwischen den Stellungen für Abblendlicht und Fernlicht erfordernde Abschirmvorrichtungen angegeben.

### Zeichnung

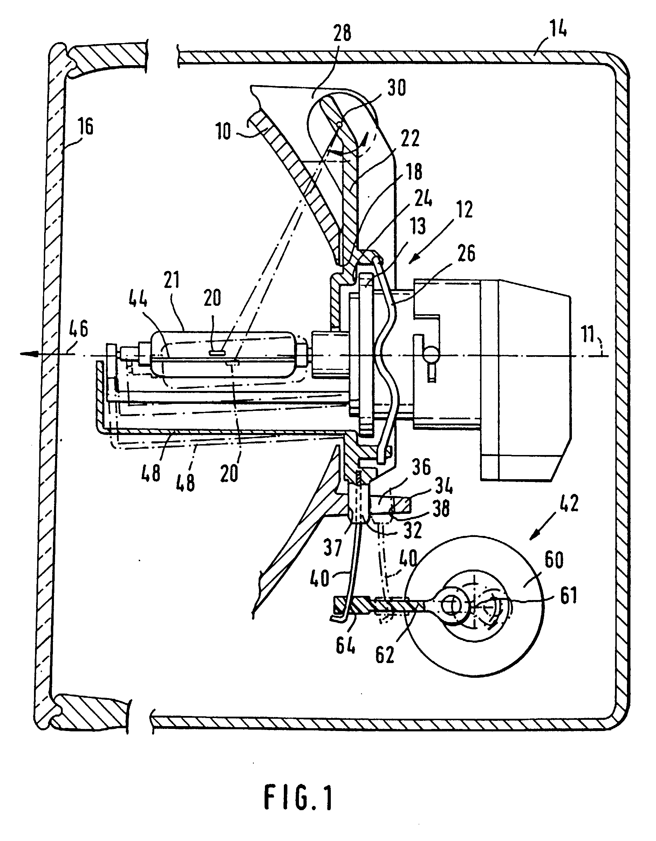

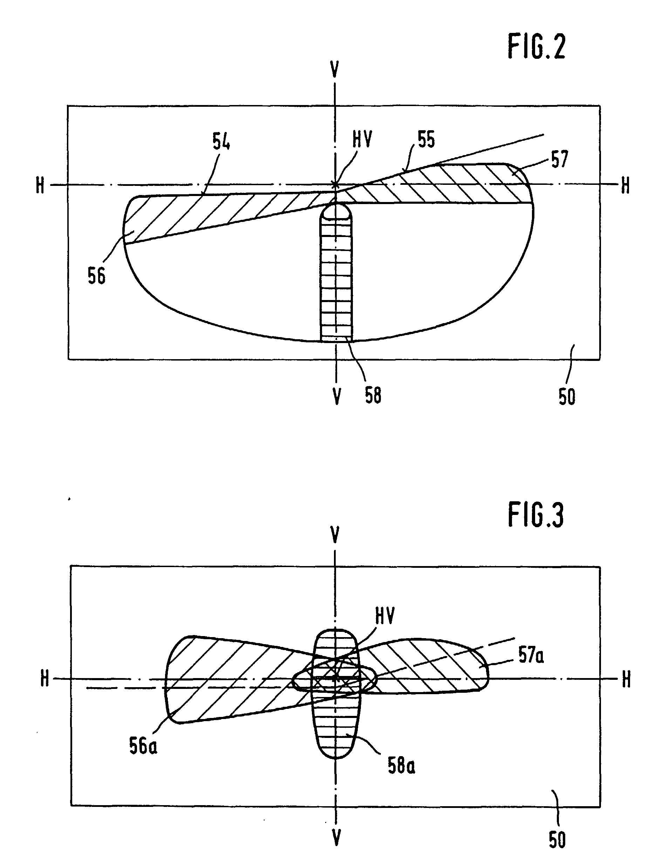

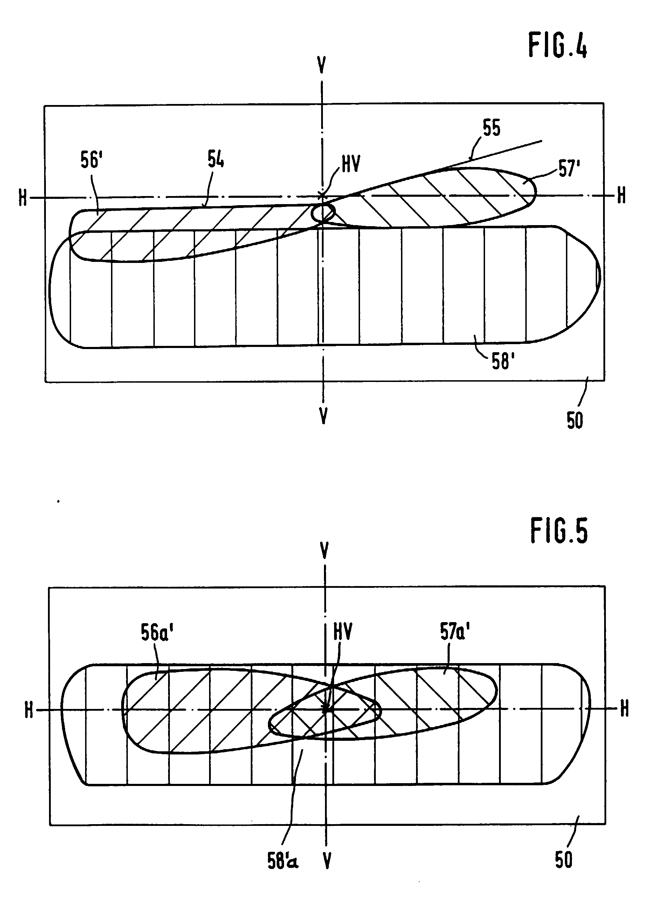

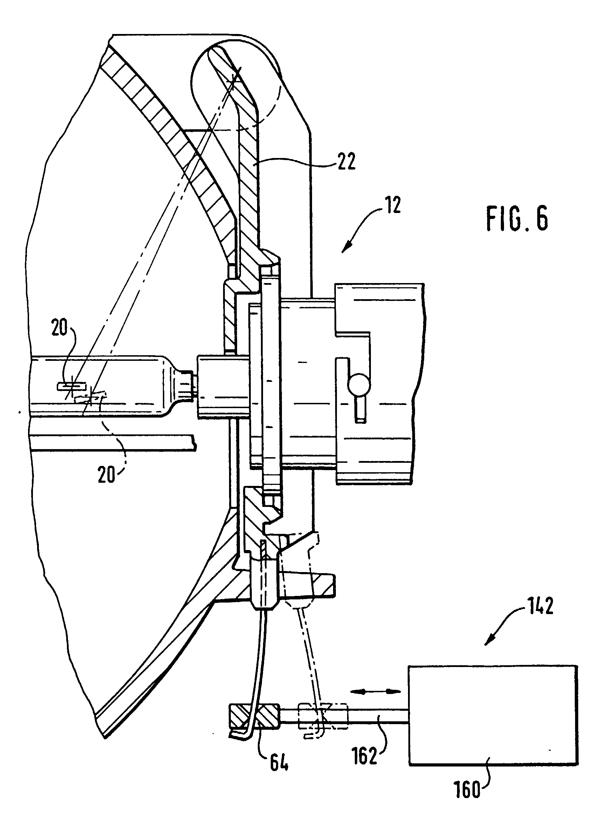

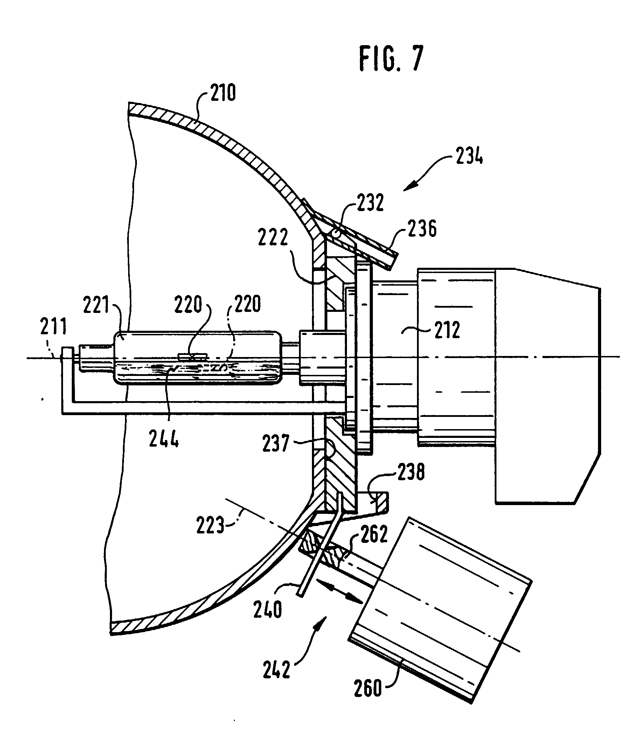

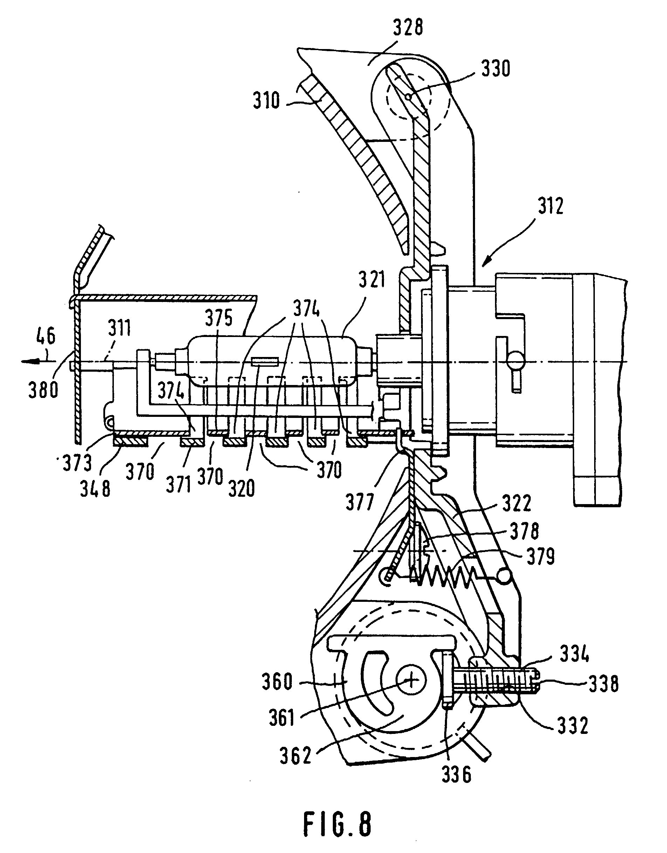

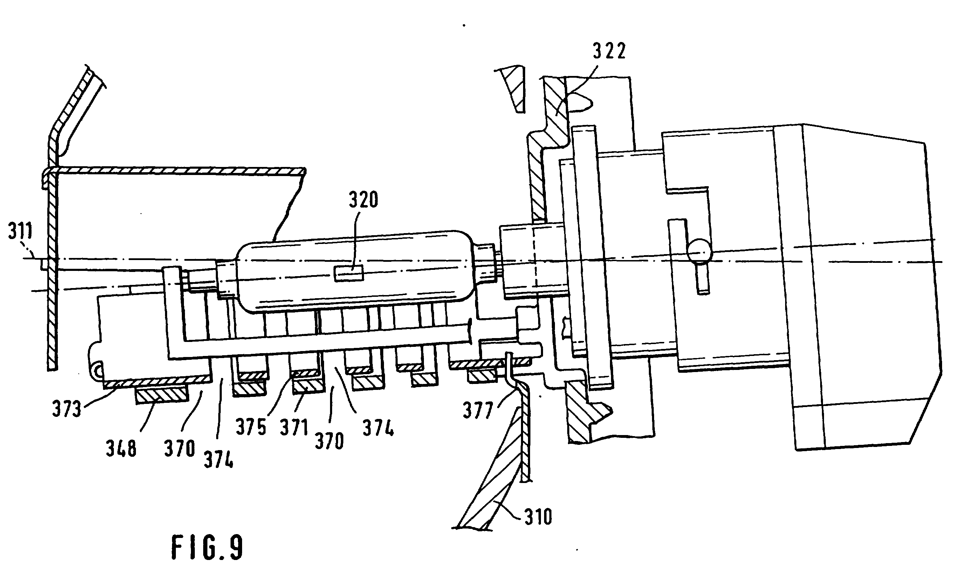

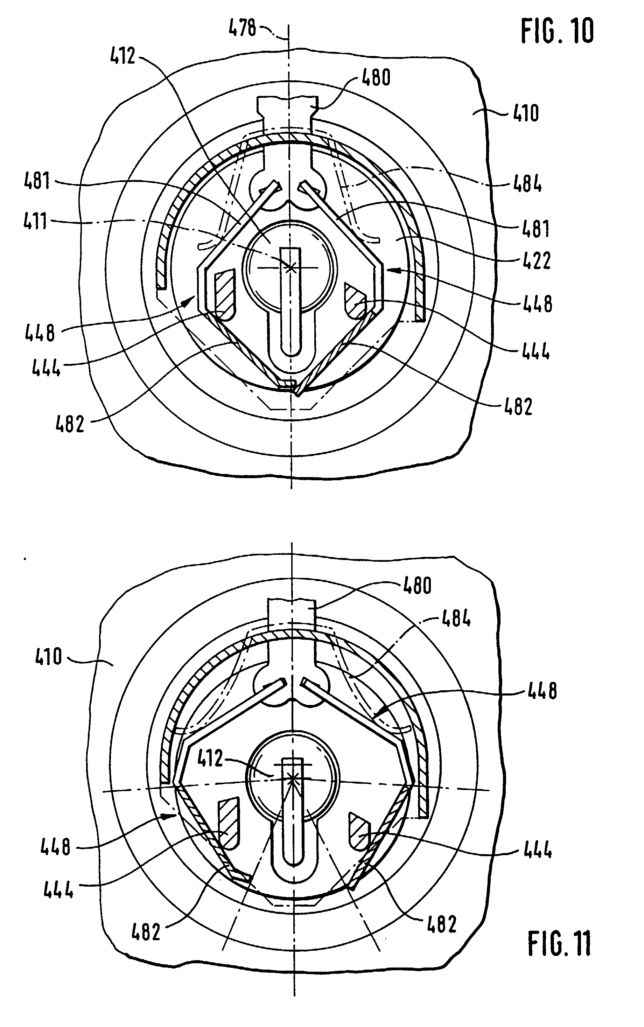

Mehrere Ausführungsbeispiele der Erfindung sind in der Zeichnung dargestellt und in der nachfolgenden Beschreibung näher erläutert. Es zeigen Figur 1 einen Scheinwerfer für Abblendlicht und Fernlicht für Fahrzeuge in einem vertikalen Längsschnitt mit einem Stellelement zur Bewegung der Lichtquelle nach einem ersten Ausführungsbeispiel, Figur 2 einen vor dem Scheinwerfer angeordneten Meßschirm, der durch das vom Reflektor in der Betriebsstellung Abblendlicht ausgesandte Lichtbündel beleuchtet wird, Figur 3 den Meßschirm bei der Beleuchtung durch das vom Reflektor in der Betriebsstellung Fernlicht ausgesandte Lichtbündel, Figur 4 den Meßschirm bei der Beleuchtung durch das aus dem Scheinwerfer nach Durchtritt durch eine Streuscheibe austretende Lichtbündel in der Betriebsstellung Abblendlicht, Figur 5 den Meßschirm bei der Beleuchtung durch das aus dem Scheinwerfer nach Durchtritt durch die Streuscheibe austretende Lichtbündel in der Betriebsstellung Fernlicht, Figur 6 einen Ausschnitt des Scheinwerfers mit einer Variante des Stellelements zur Bewegung der Lichtquelle und Figur 7 einen Ausschnitt des Scheinwerfers mit einem zweiten Ausführungsbeispiel des Stellelements zur Bewegung der Lichtquelle, Figur 8 einen Ausschnitt des Scheinwerfers gemäß einem dritten Ausführungsbeispiel mit einer modifizierten Abschirmvorrichtung in einer Stellung für Abblendlicht, Figur 9 den Scheinwerfer von Figur 8 mit der Abschirmvorrichtung in einer Stellung für Fernlicht, Figur 10 einen Ausschnitt des Scheinwerfers gemäß einem vierten Ausführungsbeispiel mit einer modifizierten Abschirmvorrichtung in einer Stellung für Abblendlicht in der Ansicht entgegen Lichtaustrittsrichtung und Figur 11 den Scheinwerfer von Figur 10 mit der Abschirmvorrichtung in einer Stellung für Fernlicht.

### Beschreibung der Ausführungsbeispiele

Ein in Figur 1 dargestellter Scheinwerfer für Abblendlicht und Fernlicht für Fahrzeuge, insbesondere Kraftfahrzeuge, weist einen Reflektor 10 und eine Lichtquelle 12 auf. Der Reflektor 10 ist in einer Halterung oder einem Gehäuse 14 verstellbar angeordnet. Die Lichtaustrittsöffnung des Gehäuses 14 ist mit einer lichtdurchlässigen Scheibe 16 aus Kunststoff oder Glas abgedeckt, die als glatte Scheibe ausgebildet sein kann oder optisch wirksame Elemente aufweisen kann, durch die das hindurchtretende Licht abgelenkt wird. Der Reflektor 10 kann aus Kunststoff oder Metall bestehen und weist in seinem Scheitelbereich eine Öffnung 18 auf, durch die die Lichtquelle 12 von der Rückseite her in den Reflektor 10 hineinragt. Die Lichtquelle 12 ist eine Gasentladungslampe und weist einen Leuchtkörper 20 auf, der der Lichtbogen ist und der von einer zumindest bereichsweise lichtdurchlässigen Umhüllung 21 aus Glas umschlossen ist.

Die Lichtquelle 12 ist in einem Lampenträger 22 eingesetzt, der einen dem Sockel 13 der Lichtquelle 12 angepaßten Aufnahmeabschnitt 24 aufweist und der von der Rückseite des Reflektors 10 her an die Öffnung 18 angesetzt ist. Der Lampenträger 22 kann aus Metall, Kunststoff oder Keramik bestehen. Die Lichtquelle 12 ist in bekannter Weise mittels eines am Lampenträger 22 angeordneten elastischen Befestigungselements 26 im Lampenträger 22 gehalten, das beispielsweise als ein Befestigungsbügel aus Draht ausgebildet sein kann. Auf der Rückseite des Reflektors 10 sind oberhalb von dessen Öffnung 18 mit horizontalem Abstand zueinander zwei Träger 26 angeordnet, von denen in Figur 1 nur einer erkennbar ist, die einstückig mit dem Reflektor 10 ausgebildet sein können oder als separate Teile am Reflektor 10 befestigt sein können. Der Lampenträger 22 ist in seinem oberen Randbereich an den Trägern 26 um eine sich horizontal und senkrecht zur optischen Achse 11 des Reflektors 10 erstreckende Achse 30 schwenkbar gelagert. An seinem der Schwenkachse 30 gegenüberliegenden unteren Randbereich weist der Lampenträger 22 eine Nase 32 auf. Auf der Rückseite des Reflektors 10 ist unterhalb der Öffnung 18 eine Konsole 34 angeordnet, die einstückig mit dem Reflektor 10 ausgebildet ist, jedoch auch als separates Teil am Reflektor 10 befestigt sein kann. Die Konsole 34 weist eine in Richtung der optischen Achse 11 des Reflektors 10 langgestreckte Ausnehmung 36 auf, in die die Nase 32 des Lampenträgers 22 eingreift und in der Ausnehmung 36 entlang deren Längserstreckung bewegbar ist. Die Ausnehmung 36 weist zum Reflektor 10 hin einen vorderen Rand 37 und vom Reflektor 10 weg einen hinteren Rand 38 auf. An der Nase 32 des Lampenträgers 22 ist ein elastisch verformbares Zwischenglied 40 befestigt, das beispielsweise als eine Blattfeder ausgebildet sein kann, die in einem Schlitz 42 in der Nase 32 befestigt ist. Am freien Ende des Zwischenglieds 40 greift ein Stellelement 42 an, das nachfolgend noch näher beschrieben wird und durch das eine Schwenkbewegung des Lampenträgers 22 um die Achse 30 bewirkt werden kann.

Die Umhüllung 21 der Lichtquelle 12 ist etwa rohrförmig ausgebildet und auf dieser sind seitlich sich etwa parallel zur optischen Achse 11 des Reflektors 10 erstreckende Streifen 44 aus einer lichtundurchlässigen Beschichtung angeordnet. Der zwischen den Streifen 44 angeordnete obere und untere Umfangsbereich der Umhüllung 21 ist nicht von der Beschichtung bedeckt und lichtdurchlässig. Zusätzlich zu den Streifen 44 kann auch das in Lichtaustrittsrichtung 46 weisende Stirnende der Umhüllung 21 von der Beschichtung bedeckt sein, um zu verhindern, daß vom Leuchtkörper 20 ausgesandtes Licht direkt, das heißt ohne Reflexion am Reflektor 10 austritt. Unterhalb der Lichtquelle 12 ist im Reflektor 10 eine lichtundurchlässige Kappe 48 angeordnet, durch die vom Leuchtkörper 20 der Lichtquelle 12 ausgesandtes, durch den zwischen den Streifen 44 angeordneten unteren Umfangsbereich der Umhüllung 21 austretendes Licht abgeschirmt wird, so daß es nicht auf den Reflektor 10 treffen kann. Die Kappe 48 bildet zusammen mit den Streifen 44 auf der Umhüllung 21 eine Abschirmvorrichtung, durch die ein Teil des vom Leuchtkörper 20 der Lichtquelle 12 ausgesandten Lichts abgeschirmt wird. Durch die oberen Ränder der Streifen 44 wird eine obere Helldunkelgrenze des aus dem Scheinwerfer austretenden Lichtbündels gebildet. Die Kappe 48 ist starr mit dem Lampenträger 22 verbunden, kann jedoch auch einstückig mit diesem ausgebildet sein, so daß sie die durch das Stellelement 42 bewirkte Bewegung des Lampenträgers 22 und der in diesem angeordneten Lichtquelle 12 ebenfalls ausführt. Die Umhüllung 21 der Lichtquelle 12 kann auch über ihren gesamten Umfang lichtdurchlässig ausgebildet sein, wobei dann die Kappe 48 so ausgebildet ist, daß durch deren obere Ränder die Helldunkelgrenze des vom Reflektor 10 reflektierten Abblendlichtbündels gebildet wird.

In einer Stellung des Lampenträgers 22 und der in diesem angeordneten Lichtquelle 12 mit deren Leuchtkörper 20 für Abblendlicht, wie sie in Figur 1 mit durchgezogenen Linien dargestellt ist, befindet sich die Nase 32 des Lampenträgers 22 durch das Stellelement 42 bewirkt in der Anlage am vorderen Rand 37 der Ausnehmung. Der Leuchtkörper 20 der Lichtquelle 12 befindet sich dabei in einer genau festgelegten Stellung bezüglich dem Reflektor 10, so daß das vom Leuchtkörper 20 ausgesandte Licht vom Reflektor 10 zur Bildung eines Abblendlichtbündels reflektiert wird. Durch die Streifen 44 wird dabei die Helldunkelgrenze des Abblendlichtbündels erzeugt.

In den Figuren 2 bis 5 ist ein vor dem Scheinwerfer angeordneter Meßschirm 50 dargestellt, der die Projektion einer vor dem Scheinwerfer angeordneten Fahrbahn darstellt, die beim realen Einsatz des Scheinwerfers entsprechend beleuchtet würde. Der Meßschirm 50 weist eine horizontale Mittelebene HH und eine vertikale Mittelebene VV auf. In Figur 2 ist der Meßschirm 50 bei der Beleuchtung durch das vom Reflektor 10 bei in ihrer Abblendlichtstellung angeordneter Lichtquelle 12 reflektierte Lichtbündel ohne den Einfluß optisch wirksamer Elemente der Abdeckscheibe 16 dargestellt. Dieses Lichtbündel beleuchtet den Meßschirm 50 in einem Bereich, der nach oben durch die Helldunkelgrenze 54,55 begrenzt ist. Die Helldunkelgrenze weist auf der linken Seite des Meßschirms 50, das heißt auf der Gegenverkehrsseite bei Rechtsverkehr, einen horizontalen Abschnitt 54 und auf der rechten Seite des Meßschirms 50, das heißt auf der eigenen Verkehrsseite bei Rechtsverkehr, einen zum äußeren Rand hin ansteigenden Abschnitt 55. Die direkt unterhalb der Helldunkelgrenze 54 und 55 beleuchteten Bereiche sind mit 56 und 57 bezeichnet und ein Bereich weiter unterhalb der Helldunkelgrenze 54,55 nahe der vertikalen Mittelebene VV des Meßschirms ist mit 58 bezeichnet. In Figur 4 ist der Meßschirm 50 bei der Beleuchtung durch das aus dem Scheinwerfer austretende Abblendlichtbündel nach Durchtritt durch die Abdeckscheibe 16 und Ablenkung durch optisch wirksame Elemente der Abdeckscheibe 16 dargestellt. Durch die optisch wirksamen Elemente wird eine Streuung des Lichtbündels bewirkt, wobei der Bereich 56' entlang dem horizontalen Abschnitt 54 der Helldunkelgrenze gestreut ist, der Bereich 57' entlang dem ansteigenden Abschnitt 55 der Helldunkelgrenze gestreut ist und der Bereich 58' im wesentlichen in horizontaler Richtung gestreut ist.

In Figur 1 ist der Lampenträger 22 zusammen mit der in diesem angeordneten Lichtquelle 12 und deren Leuchtkörper 20 mit gestrichelten Linien in der Stellung für Fernlicht dargestellt. In dieser Fernlichtstellung befindet sich die Nase 32 des Lampenträgers 22 durch das Stellelement 42 bewirkt in der Anlage am hinteren Rand 38 der Ausnehmung. Der Leuchtkörper 20 der Lichtquelle 12 ist gegenüber der Stellung für Abblendlicht in Richtung der optischen Achse 11 näher zum Reflektorscheitel hin angeordnet und außerdem vertikal bezüglich der optischen Achse 11 nach unten versetzt. Die Kappe 48 ist in ihrer Fernlichtstellung gegenüber ihrer Abblendlichtstellung ebenfalls in Richtung der optischen Achse 11 näher zum Reflektorscheitel hin und außerdem bezüglich der optischen Achse 11 nach unten versetzt angeordnet. In Figur 3 ist der Meßschirm 50 bei Beleuchtung durch das vom Reflektor 10 bei in ihrer Fernlichtstellung angeordneter Lichtquelle 12 reflektierte Lichtbündel dargestellt. Durch die Bewegung der Lichtquelle 12 in Richtung der optischen Achse 11 sind die beleuchteten Bereiche 56a und 57a gegenüber der Darstellung in Figur 2 zur vertikalen Mittelebene VV des Meßschirms 50 hin verschoben und der Bereich 58a ist nach oben über die horizontale Mittelebene HH hinaus verschoben, wobei sich alle drei Bereiche 56a, 57a und 58a teilweise überlagern, so daß im Bereich des Schnittpunkts HV der vertikalen Mittelebene VV mit der horizontalen Mittelebene HH des Meßschirms 50 hohe Beleuchtungsstärkewerte vorhanden sind. Durch die Bewegung der Lichtquelle 12 vertikal nach unten bezüglich der optischen Achse 11 sind die beleuchteten Bereiche 56a ,57a und 58a vertikal höher angeordnet als bei der Darstellung in Figur 2 und reichen bis über die horizontale Mittelebene HH hinaus. Außerdem ist die Helldunkelgrenze wegen der Bewegung der Lichtquelle 12 und der Kappe 48 nach oben verschoben. In Figur 5 ist der Meßschirm 50 bei der Beleuchtung durch das vom Scheinwerfer nach Durchtritt durch die Abdeckscheibe 16 und Ablenkung durch die optisch wirksamen Elemente dargestellt. Alle drei Bereiche 56a' ,57a' und 58a' sind in horizontaler Richtung gestreut und zumindest teilweise oberhalb der horizontalen Mittelebene HH angeordnet, wobei sich wegen der Überlagerung der Bereiche nahe dem Schnittpunkt HV dort eine Konzentration des Lichts und hohe Beleuchtungsstärkewerte im Fernbereich ergeben.

Beim ersten Ausführungsbeispiel des Scheinwerfers gemäß Figur 1 weist das Stellelement 42 einen Elektromotor 60 als Antrieb auf, an dessen Welle exzentrisch zu deren Drehachse 61 als Übertragungsglied ein Hebel 62 drehbar angelenkt ist, der mit dem Zwischenglied 40 gekoppelt ist. Der Hebel 62 weist in seinem freien Endbereich eine Öffnung 64 auf, durch die der freie Endbereich des Zwischenglieds 40 hindurchtritt. Die in Richtung der optischen Achse 11 weisenden Ränder der Öffnung 64 sind zueinander hin sich verjüngend ausgebildet, wobei deren Enden spitz zulaufend oder gerundet sein können und in einem solchen Abstand zueinander angeordnet sind, daß das Zwischenglied 40 mit möglichst geringem Spiel zwischen diesen aufgenommen ist. Bei einer Betätigung des Elektromotors 60 führt der Hebel 62 eine Bewegung in Richtung der optischen Achse 11 aus, die über das Zwischenglied 40 auf den Lampenträger 22 und die in diesem angeordnete Lichtquelle 12 übertragen wird, die eine Schwenkbewegung um die Achse 30 ausführen. In Figur 1 ist der Hebel 62 mit durchgezogenen Linien in der Stellung für Abblendlicht dargestellt, in der er sich am weitesten in Lichtaustrittsrichtung 46 bewegt befindet. Dabei befindet sich die Nase 32 des Lampenträgers 22 in der Anlage am vorderen Rand 37 der Ausnehmung 36, wobei das Zwischenglied 40 elastisch verformt ist, also der Hebel 62 weiter in Lichtaustrittsrichtung 46 bewegt ist als es für die Anlage der Nase 32 am Rand 37 erforderlich wäre. Die Nase 32 des Lampenträgers 22 wird somit unter Vorspannung in der Anlage am Rand 37 gehalten, so daß auch bei Erschütterungen die Anlage erhalten bleibt und sich die Lichtquelle 12 in ihrer für die vorschriftsmäßige Erzeugung des Abblendlichts erforderlichen Stellung befindet. Außerdem ist durch das elastisch verformbare Zwischenglied ein Ausgleich von Maßtoleranzen des Stellelements 42 und des Lampenträgers 22 möglich, so daß diese Teile nicht ganz exakt aufeinander abgestimmt werden müssen. In Figur 1 ist der Hebel 62 mit gestrichelten Linien außerdem in der Stellung für Fernlicht dargestellt. Der Hebel 62 befindet sich dabei am weitesten entgegen Lichtaustrittsrichtung 46 bewegt und die Nase 32 des Lamppnträgers 22 befindet sich in der Anlage am hinteren Rand 38 der Ausnehmung 36. Das Zwischenglied 40 ist auch in dieser Stellung elastisch verformt, so daß die Nase 32 unter Vorspannung in der Anlage am hinteren Rand 38 gehalten wird. Der Elektromotor 60 wird vom Fahrzeuglenker über einen Schalter zum Umschalten zwischen Abblendlicht und Fernlicht betätigt. Der Elektromotor 60 kann an der Rückseite des Reflektors 10 befestigt sein oder unabhängig vom Reflektor 10 im Gehäuse 14.

In Figur 6 ist der Scheinwerfer abschnittsweise mit einer Variante des Stellelements 142 dargestellt. Dabei weist das Stellelement 142 eine Hubstange 162 auf, die in einer geradlinigen Bewegung durch einen Antrieb 160 bewegbar ist. Die Hubstange 162 weist in ihrem Endbereich eine Öffnung 164 auf, in der das Zwischenglied 40 aufgenommen ist und die wie die Öffnung 64 des vorstehend beschriebenen Hebels 62 ausgebildet ist. Als Antrieb für die Hubstange 162 kann ein Elektromotor vorgesehen werden, dessen Drehbewegung über ein Gewinde, ein Getriebe, eine Kulissenführung oder eine Kurvenscheibe in eine Längsbewegung der Hubstange 162 umgewandelt wird. Außerdem kann auch ein hydraulischer oder pneumatischer Antrieb verwendet werden, durch den die Längsbewegung der Hubstange 162 bewirkt wird. Schließlich kann auch ein Elektromagnet als Antrieb verwendet werden, der durch Anlegen einer Spannung bzw. Trennen von einer Spannung eine Hubbewegung der Hubstange bewirken kann. Der Antrieb kann an der Rückseite des Reflektors 10 oder unabhängig von diesem im Gehäuse 14 befestigt sein.

In Figur 7 ist ein zweites Ausführungsbeispiel des Scheinwerfers dargestellt, bei dem der Scheinwerfer grundsätzlich gleich aufgebaut ist wie vorstehend beim ersten Ausführungsbeispiel beschrieben und zu dem nachfolgend im wesentlichen nur die abweichenden Merkmale beschrieben werden. Die Lichtquelle 212 ist in einem Lampenträger 222 aufgenommen, der auf der Rückseite des Reflektors 210 angeordnet ist und bezüglich dem Reflektor 210 entlang einer geraden Linie 223 in Richtung des in Figur 7 dargestellten Doppelpfeils bewegbar ist, wobei die Linie 223 in dem Sinne geneigt zur optischen Achse 211 verläuft, daß deren Abstand von der optischen Achse 211 vertikal nach unten zum Reflektorscheitel hin zunimmt. Am Lampenträger 222 greift ein Stellelement 242 an, durch das die Bewegung des Lampenträgers 222 entlang der Linie 223 bewirkt wird. Das Stellelement 242 kann wie beim ersten Ausführungsbeispiel beschrieben einen Elektromotor oder einen Elektromagneten als Antrieb oder einen hydraulischen oder pneumatischen Antrieb aufweisen, durch den eine Hubstange 262 in einer Längsbewegung angetrieben wird, die vorzugsweise über ein elastisch verformbares Zwischenglied 240 am Lampenträger 222 angreift. Für den Lampenträger 222 ist ein erster Anschlag 237 vorgesehen, an dem er in der Stellung für Abblendlicht zur Anlage kommt, und ein zweiter Anschlag 238, an dem er in der Stellung für Fernlicht zur Anlage kommt. Wie beim ersten Ausführungsbeispiel sind die Stellungen für Abblendlicht und Fernlicht des Lampenträgers 222 so gewählt, daß sich der Leuchtkörper 220 der Lichtquelle 212 ausgehend von der Stellung für Abblendlicht in die Stellung für Fernlicht in Richtung der optischen Achse 211 zum Reflektorscheitel hin und vertikal nach unten bezüglich der optischen Achse 211 versetzt befindet. Für den Lampenträger 222 ist vorzugsweise an der Rückseite des Reflektors 210 eine Führung 234 angeordnet, in der der Lampenträger 222 zur Bewegung zwischen den beiden Stellungen geradlinig geführt ist. Die Führung 234 kann beispielsweise durch wenigstens eine Schiene 236 gebildet sein, in die der Lampenträger 222 mit einem Vorsprung 232 eingreift.

Die Lichtquelle 212 weist eine Umhüllung 221 auf, auf der in deren unterem Umfangsbereich eine lichtundurchlässige Beschichtung 244 aufgebracht ist, die auch das in Lichtaustrittsrichtung 46 weisende Stirnende der Umhüllung 221 bedeckt. Der übrige obere Umfangsbereich der Umhüllung 221 ist lichtdurchlässig ausgebildet. Durch die oberen Ränder der Beschichtung 244 wird wie durch die Streifen 44 beim ersten Ausführungsbeispiel die Helldunkelgrenze des vom Reflektor 210 reflektierten Lichtbündels gebildet. Die Beschichtung 244 stellt eine Abschirmvorrichtung dar, durch die ein Teil des vom Leuchtkörper 220 der Lichtquelle 212 ausgesandten Lichts abgeschirmt wird, so daß es nicht auf den Reflektor 210 treffen kann. Diese Ausbildung der Lichtquelle 212, durch die keine zusätzliche Kappe 48 wie beim ersten Ausführungsbeispiel erforderlich ist, kann auch beim Scheinwerfer gemäß dem ersten Ausführungsbeispiel verwendet werden. Außerdem kann die Ausbildung der Lichtquelle 12 gemäß dem ersten Ausführungsbeispiel auch beim Scheinwerfer gemäß dem zweiten Ausführungsbeispiel verwendet werden, wobei dann auch die Kappe 48 vorgesehen ist, die einstückig mit dem Lampenträger 222 oder starr mit diesem verbunden sein kann.

Die vom Scheinwerfer gemäß dem zweiten Ausführungsbeispiel in der Stellung für Abblendlicht und in der Stellung für Fernlicht ausgesandten Lichtbündel beleuchten den Meßschirm 50 in gleicher Weise wie in den Figuren 2 bis 5 dargestellt, da die Bewegung der Lichtquelle 212 zwischen den gleichen Stellungen erfolgt und nur das Stellelement 242 unterschiedlich ausgebildet ist.

In den Figuren 8 und 9 ist der Scheinwerfer gemäß einem dritten Ausführungsbeispiel dargestellt, wobei der Scheinwerfer grundsätzlich ebenfalls gleich aufgebaut ist wie beim ersten Ausführungsbeispiel beschrieben und daher nachfolgend im wesentlichen nur die abweichenden Merkmale beschrieben werden. Der Scheinwerfer weist den Reflektor 310 sowie die Lichtquelle 312 auf, die im Lampenträger 322 angeordnet ist. Die Umhüllung 321 der Lichtquelle 312 ist über ihren gesamten Umfang lichtdurchlässig ausgebildet. Am Lampenträger 322 ist eine Kappe 348 befestigt, die in den Reflektor 310 ragt und die die Lichtquelle 312 auf ihrem unteren Umfangsbereich umgibt. Die Kappe 348 kann im Schnitt quer zur optischen Achse 311 beispielsweise u-förmig oder in Form eines Kreisabschnitts ausgebildet sein. Die Kappe 348 ist lichtundurchlässig ausgebildet und weist in Richtung der optischen Achse 311 mehrere hintereinander angeordnete schlitzartige Öffnungen 370 auf, die sich über den Umfang der Kappe 348 bis nahe an deren obere Ränder 344 erstrecken und die durch Stege 371 voneinander getrennt sind. Innerhalb der Kappe 348 ist ein schieberartiger Einsatz 373 angeordnet, der nahe dem inneren Umfang der Kappe 348 angeordnet ist und relativ zu dem die Kappe 348 in Längsrichtung bewegbar ist. Der Schieber 373 ist ebenfalls lichtundurchlässig ausgebildet und weist mehrere in Richtung der optischen Achse 311 hintereinander angeordnete, schlitzartige Öffnungen 374 auf, die durch Stege 375 voneinander getrennt sind. Die Kappe 348 bildet zusammen mit dem Schieber 373 eine Abschirmvorrichtung. Am zum Reflektorscheitel hin angeordneten Endbereich des Schiebers 373 greift in eine Ausnehmung quer zur optischen Achse 311 ein Fixierelement 377 mit einer Nase ein, so daß der Schieber 373 in einer Stellung in Richtung der optischen Achse 311 festgelegt ist. Das Fixierelement 377 ist beispielsweise in Form einer Platte ausgebildet, die über den Rand der Öffnung 318 im Scheitelbereich des Reflektors 310 auf der Rückseite des Reflektors 310 hinausragt und mittels einer Schraube 378 an der Rückseite des Reflektors 310 befestigt ist. Am Reflektor 310 ist eine Strahlenblende 380 befestigt, durch die von der Lichtquelle 312 direkt in Lichtaustrittsrichtung 46 austretendes, nicht auf den Reflektor 310 treffendes Licht abgeschirmt wird.

Der Lampenträger 322 ist in seinem oberen Randbereich wie beim ersten Ausführungsbeispiel an den Trägern 328 um die Achse 330 schwenkbar gelagert. An seinem unteren Randbereich weist der Lampenträger 322 eine Gewindebohrung 332 auf, in die eine Schraube 334 eingedreht ist, die einen zur Rückseite des Reflektors 310 weisenden Kopf 336 aufweist und an ihrem anderen Ende einen Schlitz 338 aufweist. Das Stellelement 342 weist als Antrieb einen Elektromotor 360 auf, der mit seiner Welle 361 senkrecht zur optischen Achse 311 und horizontal angeordnet ist. Mit der Welle 361 ist eine Kurvenscheibe 362 drehfest verbunden, die über ihren Umfang mit veränderlichem Abstand zur Welle 361 verläuft. Am Lampenträger 322 ist eine Zugfeder 379 eingehängt, die andererseits am Fixierelement 377 eingehängt ist und durch die der Kopf 336 der Schraube 334 in der Anlage an der Kurvenscheibe 362 gehalten wird. Durch ein Hinein- oder Herausdrehen der Schraube 334 ist eine Grundeinstellung der Stellung des Lampenträgers 322 und damit der in diesem angeordneten Lichtquelle 312 ermöglicht.

Die Anordnung nach Figuren 8, 9, 10, 11 kann auch mit Stellelementen und Anlenksystemen der Figuren 1 und 6 getätigt werden.

In Figur 8 ist der Scheinwerfer in der Stellung für Abblendlicht dargestellt, in der die Kurvenscheibe 362 sich in einer solchen Drehstellung befindet, daß der Kopf 336 der Schraube 334 an dem Umfangsbereich der Kurvenscheibe 362 anliegt, der den geringsten Abstand von der Welle 361 aufweist. Die Lichtquelle 312 ist dabei so angeordnet, daß sich deren Leuchtkörper 320 etwa auf der optischen Achse 311 befindet. Der Schieber 373 ist in der Kappe 348 so angeordnet, daß dessen Stege 375 die Schlitze 370 der Kappe 348 überdecken, so daß von der Lichtquelle 312 in deren unterem Umfangsbereich ausgesandtes Licht nicht durch die vom Schieber 373 und der Kappe 348 gebildete Abschirmvorrichtung hindurchtreten und auf einen unteren Bereich des Reflektors 310 treffen kann. Durch die oberen Ränder 344 der Kappe 348 wird die obere Helldunkelgrenze des Abblendlichtbündels gebildet.

In Figur 9 ist der Scheinwerfer in einer Stellung für Fernlicht dargestellt, in der sich die Kurvenscheibe 362 in einer solchen Drehstellung befindet, daß der Kopf 336 der Schraube 334 in einem Umfangsbereich der Kurvenscheibe 362 anliegt, der mit größerem Abstand von der Welle 361 angeordnet ist. Der Lampenträger 322 ist dabei um die Achse 330 derart geschwenkt, daß der Leuchtkörper 320 der Lichtquelle 312 gegenüber der Stellung für Abblendlicht in Richtung der optischen Achse 311 zum Reflektorscheitel hin und vertikal zur optischen Achse 311 nach unten versetzt angeordnet ist. Die Kappe 348 führt wegen ihrer starren Verbindung mit dem Lampenträger 322 die Schwenkbewegung ebenfalls aus, während der Schieber 373 durch das Fixierelement 377 bedingt nicht bewegt werden kann. Es ergibt sich somit eine Bewegung der Kappe 348 relativ zum Schieber 373, so daß die Schlitze 370 der Kappe 348 in der Stellung für Fernlicht nicht mehr von den Stegen 375 des Schiebers 373 verdeckt werden, sondern die Schlitze 374 des Schiebers 373 mit denen der Kappe 348 fluchten und von der Lichtquelle 312 in deren unterem Umfangsbereich ausgesandtes Licht durch die Schlitze 370,374 hindurchtreten und auf den unteren Bereich des Reflektors 310 treffen kann. Für die Erzeugung des Fernlichts kann somit zusätzlich auch der untere Bereich des Reflektors 310 genutzt werden.

Beim der vorstehend beschriebenen Ausführung des Scheinwerfers gemäß dem dritten Ausführungsbeispiel ergibt sich die Bewegung der durch die Kappe 348 und den Schieber 373 gebildeten Abschirmvorrichtung zwischen ihrer Stellung für Abblendlicht und ihrer Stellung für Fernlicht zwangsläufig mit der Bewegung der Lichtquelle 312, so daß hierfür kein zusätzliches Stellelement erforderlich ist. Die vom Reflektor 310 reflektierten bzw. aus dem Scheinwerfer nach Durchtritt durch die Abdeckscheibe 16 austretenden Lichtbündel beleuchten den Meßschirm 50 wie in den Figuren 2 bis 5 dargestellt.

In den Figuren 10 und 11 ist der Scheinwerfer gemäß einem dritten Ausführungsbeispiel dargestellt, zu dem nachfolgend nur die modifizierte Abschirmvorrichtung beschrieben wird. Die Lichtquelle 412 ist im Lampenträger 422 angeordnet, der wie bei einem der vorstehend beschriebenen Ausführungsbeispiele ausgebildet sein kann und in einer Schwenkbewegung oder wie bei der Ausführung gemäß Figur 7 geradlinig zwischen der Stellung für Abblendlicht und der Stellung für Fernlicht bewegbar ist. Als Abschirmvorrichtung, durch die in der Stellung für Abblendlicht von der Lichtquelle 412 auf deren unterem Umfangsbereich ausgesandtes Licht abgeschirmt wird, so daß es nicht auf den unteren Bereich des Reflektors 410 treffen kann, dienen beim Scheinwerfer gemäß dem vierten Ausführungsbeispiel zwei flügelartige Teile 448, die sich entlang der optischen Achse 411 erstrecken und die in einer die optische Achse 411 enthaltenden, etwa vertikalen Ebene 478 getrennt sind. Die Flügel 448 sind in ihrem oberen Bereich am Reflektor 410 oder an einem am Reflektor 410 befestigten Träger 480 um jeweils eine sich etwa parallel zur optischen Achse 411 erstreckende Achse schwenkbar gelagert. In ihrem oberen Bereich sind die Flügel 448 nur als schmale Stege 481 ausgebildet, so daß sie nur wenig von der Lichtquelle 412 in ihrem oberen Umfangsbereich ausgesandtes Licht abschirmen. In ihrem unteren Bereich 482 sind die Flügel 448 jedoch halbschalenartig geschlossen und lichtundurchlässig ausgebildet. Auf die Oberseite der Stege 481 der Flügel 448 wirkt eine vorgespannte etwa c-förmige Feder 484, durch die die Halbschalen 482 zueinander hin gedrückt werden. Die Feder 484 ist am Träger 480 gehalten. Am Lampenträger 422 ist zu beiden Seiten neben der Lichtquelle 412 jeweils ein lichtundurchlässiger Steg 444 befestigt, die sich etwa parallel zur Längsachse der Lichtquelle 412 erstrecken. Die Stege 444 können auch an der Lichtquelle 412 befestigt sein.

In Figur 10 ist die Abschirmvorrichtung in ihrer Stellung für Abblendlicht dargestellt, in der die Flügel 448 durch die Feder 484 bewirkt mit ihren Halbschalen 482 aneinander anliegen und eine geschlossene Schale bilden, so daß von der Lichtquelle 412 in ihrem unteren Umfangsbereich ausgesandtes Licht nicht austreten und auf den unteren Bereich des Reflektors 410 treffen kann. Die oberen Ränder der Stege 444 ragen dabei über die geschlossenen unteren Bereiche der Halbschalen 482 hinaus und bilden die Helldunkelgrenze des Abblendlichtbündels.

In Figur 11 ist die Abschirmvorrichtung in ihrer Stellung für Fernlicht dargestellt, in der die Lichtquelle 412 und die Stege 444 bezüglich der optischen Achse 411 vertikal nach unten versetzt angeordnet sind. Die Stege 444 kommen dabei an den Innenseiten der Halbschalen 482 zur Anlage und drücken diese gegen die Kraft der Feder 484 auseinander, wobei die Flügel 448 um ihre Achsen schwenken, so daß eine Öffnung freigegeben wird, durch die auch von der Lichtquelle 412 in ihrem unteren Umfangsbereich ausgesandtes Licht austreten und auf den unteren Bereich des Reflektors 410 treffen kann. Die Stege 444 sind dann im Schatten der Halbschalen 482 angeordnet.

Auch beim Scheinwerfer gemäß dem vierten Ausführungsbeispiel wird die durch die beiden Flügel 448 gebildete Abschirmvorrichtung bei der Bewegung der Lichtquelle 412 zwischen ihrer Stellung für Abblendlicht und ihrer Stellung für Fernlicht zwangsläufig ebenfalls zwischen ihrer Stellung für Abblendlicht und ihrer Stellung für Fernlicht mitbewegt, so daß hierzu kein gesondertes Stellelement erforderlich ist. Die vom Reflektor 410 reflektierten bzw. aus dem Scheinwerfer nach Durchtritt durch die Abdeckscheibe 16 austretenden Lichtbündel beleuchten den Meßschirm 50 wie in den Figuren 2 bis 5 dargestellt.

Bei den Ausführungen des Scheinwerfers gemäß den Figuren 8 bis 11 können auch die Stellelemente und/oder die Abblendsysteme gemäß den Figuren 1 und 6 verwendet werden.

## Patentansprüche

1. Scheinwerfer für Abblendlicht und Fernlicht für Fahrzeuge, mit einem Reflektor (10;210) und mit einer Lichtquelle (12;212) in Form einer Gasentladungslampe, die durch ein Stellelement (42;142;242) relativ zum Reflektor (10;210) zwischen einer Stellung für Abblendlicht und einer Stellung für Fernlicht in Richtung der optischen Achse (11;211) des Reflektors (10;210) und zusätzlich auch vertikal zur optischen Achse (11;211) bewegbar ist, dadurch gekennzeichnet, daß eine der Lichtquelle (12;212) zugeordnete, bewegbare Abschirmvorrichtung (44,48;244) vorgesehen ist, durch die zumindest in der Stellung der Lichtquelle (12;212) für Abblendlicht ein Teil des von der Lichtquelle (12;212) ausgesandten Lichts abgeschirmt und eine obere Helldunkelgrenze (54,55) des aus dem Scheinwerfer austretenden Abblendlichtbündels erzeugt wird, wobei die Abschirmvorrichtung (44,48;244) durch dasselbe Stellelement (42;142;242) bewegbar ist wie die Lichtquelle (12;212).

2. Scheinwerfer nach Anspruch 1, dadurch gekennzeichnet, daß die Lichtquelle (12;212) eine zumindest bereichsweise lichtdurchlässige Umhüllung (21;221) aufweist, auf die bereichsweise eine lichtundurchlässige Beschichtung (44;244) aufgebracht ist, die zumindest teilweise die Abschirmvorrichtung bildet.

3. Scheinwerfer nach Anspruch 2, dadurch gekennzeichnet, daß zusätzlich eine lichtundurchlässige Kappe (48) vorgesehen ist, die zusammen mit der Beschichtung (44) die Abschirmvorrichtung bildet.

4. Scheinwerfer nach einem der vorstehenden Ansprüche, dadurch gekennzeichnet, daß die Lichtquelle (12;212) in einem Lampenträger (22;222) starr angeordnet ist und daß der Lampenträger (22;222) durch das an diesem angreifende Stellelement (42;142;242) bewegbar ist.

5. Scheinwerfer nach Anspruch 3 und 4, dadurch gekennzeichnet, daß die Kappe (48) starr mit dem Lampenträger (22) verbunden ist.

6. Scheinwerfer nach Anspruch 4 oder 5, dadurch gekennzeichnet, daß der Lampenträger (22) um eine sich etwa horizontal erstreckende Achse (30) schwenkbar gelagert ist und daß am Lampenträger (22) exzentrisch zu dieser Achse (30) das Stellelement (42) angreift.

7. Scheinwerfer nach Anspruch 4 oder 5, dadurch gekennzeichnet, daß der Lampenträger (222) zwischen der Stellung für Abblendlicht und der Stellung für Fernlicht geradlinig bewegbar ist.

8. Scheinwerfer nach einem der Ansprüche 4 bis 7, dadurch gekennzeichnet, daß der Lampenträger (22;222) durch das Stellelement (42;242) in der Stellung für Abblendlicht in Anlage an einen festen Anschlag (37;237) und/oder in der Stellung für Fernlicht in Anlage an einen weiteren festen Anschlag (38;238) gebracht wird.

9. Scheinwerfer nach Anspruch 8, dadurch gekennzeichnet, daß zwischen dem Lampenträger (22;222) und dem Stellelement (42;142;242) ein elastisch verformbares Zwischenglied (40;240) angeordnet ist, das in wenigstens einer Stellung des Lampenträgers (22;222) so verformt ist, daß der Lampenträger (22;222) unter Vorspannung in der Anlage an einem der Anschläge (37;237;38;238) gehalten ist.

10. Scheinwerfer nach einem der Ansprüche 4 bis 9, dadurch gekennzeichnet, daß das Stellelement (42;142;242) einen Elektromotor (60;160;260) als Antrieb aufweist.

11. Scheinwerfer nach Anspruch 10, dadurch gekennzeichnet, daß der Elektromotor (42) über ein exzentrisch an dessen Welle (61) angelenktes Übertragungsglied (62) mit dem Lampenträger (22) gekoppelt ist.

12. Scheinwerfer nach Anspruch 1, dadurch gekennzeichnet, daß die Abschirmvorrichtung eine zusammen mit der Lichtquelle (312) bewegbare, lichtundurchlässige Kappe (348) mit wenigstens einer Öffnung (370) und ein relativ zum Reflektor (310) feststehendes weiteres lichtundurchlässiges Teil (373) aufweist, durch das in der Stellung für Abblendlicht die Öffnung (370) der Kappe (348) verdeckt wird und daß die Kappe (348) in der Stellung für Fernlicht so angeordnet ist, daß ihre Öffnung (370) freigegeben ist.

13. Scheinwerfer nach Anspruch 1, dadurch gekennzeichnet, daß die Abschirmvorrichtung zwei schwenkbare, flügelartige Teile (448) aufweist, die in ihrer Stellung für Abblendlicht zur Bildung einer durchgehenden Kappe aneinandergrenzen, so daß von der Lichtquelle (412) zu einem Teilbereich des Reflektors (410) ausgesandtes Licht abgeschirmt wird, und daß wenigstens ein zusammen mit der Lichtquelle (412) bewegbares Teil (444) vorgesehen ist, durch das die flügelartigen Teile (448) bei der Bewegung der Lichtquelle (412) in ihre Stellung für Fernlicht zur Freigabe einer Öffnung auseinanderbewegbar sind, durch welche von der Lichtquelle (412) ausgesandtes Licht auf den Teilbereich des Reflektors (410) treffen kann.

14. Scheinwerfer nach Anspruch 13, dadurch gekennzeichnet, daß ein federndes Element (484) vorgesehen ist, durch das die flügelartigen Teile (448) zur Bildung der Kappe zueinander hin beaufschlagt sind.

## Claims

1. Low/high beam headlight for vehicles, having a reflector (10; 210) and having a light source (12; 212) in the form of a gas discharge lamp, which can be moved by an actuator (42; 142; 242) relative to the reflector (10; 210) between a position for low beam and a position for high beam, in the direction of the optical axis (11;211) of the reflector (10;210) and can additionally be moved vertically in relation to the optical axis (11;211), characterized in that provision is made for a movable shielding device (44,48;244) which is assigned to the light source (12;212), by means of which, at least in the position of the light source (12;212) for low beam, part of the light emitted by the light source (12;212) is shielded and an upper light/dark boundary (54, 55) of the low beam exiting from the headlight is generated, the shielding device (44,48;244) being able to be moved by the same actuator (42;142;242) as the light source (12;212).

2. Headlight according to Claim 1, characterized in that the light source (12;212) has an at least partially translucent covering (21;221) on which there is partially applied an opaque coating (44;244) which at least partially forms the shielding device.

3. Headlight according to Claim 2, characterized in that additionally an opaque cap 948) is provided which, together with the coating (44), forms the shielding device.

4. Headlight according to one of the preceding claims, characterized in that the light source (12;212) is arranged rigidly in a lamp carrier (22;222) and in that the lamp carrier (22;222) can be moved by the actuator (42;142;242) engaging on the latter.

5. Headlight according to Claim 3 and 4, characterized in that the cap (48) is rigidly connected to the lamp carrier (22).

6. Headlight according to Claim 4 or 5, characterized in that the lamp carrier (22) is supported so as to be able to pivot about an axis (30) extending approximately horizontally and in that the actuator (42) engages on the lamp carrier (22) eccentrically in relation to this axis (30).

7. Headlight according to Claim 4 or 5, characterized in that the lamp carrier (222) can be moved in a straight line between the position for low beam and the position for high beam.

8. Headlight according to one of Claims 4 to 7, characterized in that the lamp carrier (22;222) is brought by the actuator (42;242), in the position for low beam, into contact with a fixed stop (37;237) and/or, in the position for high beam, into contact with a further fixed stop (38;238).

9. Headlight according to Claim 8, characterized in that there is arranged between the lamp carrier (22;222) and the actuator (42;142;242) an elastically deformable intermediate element (40;240) which, in at least one position of the lamp carrier (22;222), is deformed in such a way that the lamp carrier (22;222) is held under pretension in contact with one of the stops (37;237;38;238).

10. Headlight according to one of Claims 4 to 9, characterized in that the actuator (42;142;242) has an electric motor (60;160;260) as drive.

11. Headlight according to Claim 10, characterized in that the electric motor (42) is coupled to the lamp carrier (22) via a transmission element (62) articulated eccentrically to the shaft (61) of the electric motor.

12. Headlight according to Claim 1, characterized in that the shielding device has an opaque cap (348) which can be moved together with the light source (312), which has at least one opening (370) and a further opaque part (373) which is fixed in relation to the reflector (310), by means of which part, in the position for low beam, the opening (370) of the cap (348) is covered, and in that the cap (348), in the position for high beam, is arranged in such a way that its opening (370) is exposed.

13. Headlight according to Claim 1, characterized in that the screening device has two pivotable, wing-like parts (448) which, in their position for low beam, adjoin each other to form a continuous cap, so that light emitted by the light source (412) towards a partial region of the reflector (410) is shielded, and in that at least one part (444) which can be moved together with the light source (412) is provided, by means of which the wing-like parts (448) can be moved away from each other, during the movement of the light source (412) into its position for high beam, to expose an opening through which light emitted by the light source (412) can impinge on the partial region of the reflector (410).

14. Headlight according to Claim 13, characterized in that a resilient element (484) is provided, by means of which the wing-like parts (448) are loaded towards each other to form the cap.

## Revendications

1. Phare pour feux de croisement et pour feux de route, comprenant un réflecteur (10 ; 210) et une source de lumière (12 ; 212) se présentant sous la forme d'une lampe à décharge de gaz qui peut être déplacée par un élément de réglage (42 ; 142 ; 242) par rapport au réflecteur (10 ; 210) entre une position pour la lumière des feux de croisement et une position pour la lumière des feux de route dans le sens de l'axe optique (11 ; 211) du réflecteur (10 ; 210) et en plus aussi verticalement en direction de l'axe optique (11 ; 211),
caractérisé en ce qu'
il est prévu un dispositif mobile, faisant écran (44, 48 ; 244) associé à la source de la lumière (12 ; 212) avec lequel on arrête au moins dans la position de la source de la lumière (12 ; 212) qui correspond aux feux de croisement une partie de la lumière émise par la source de la lumière (12 ; 212) et on produit une limite de clair-obscur supérieure (54, 55) du faisceau de lumière pour les feux de croisement qui sort du phare, le dispositif faisant écran(44, 48 ; 244) pouvant être déplacé par le même élément de réglage (42 ; 142 ; 242) que la source de la lumière (12 ; 212).

2. Phare selon la revendication 1,
caractérisé en ce que
la source de la lumière (12 ; 212) présente une enveloppe (21 ; 221) transparente au moins par endroits, sur laquelle est mis au moins par endroits un revêtement ou enduction (44 ; 244) qui ne laisse pas passer la lumière, et qui constitue au moins en partie le dispositif faisant écran.

3. Phare selon la revendication 2,
caractérisé en ce qu'
on prévoit en plus une chape (48) qui ne laisse pas passer la lumière, et qui forme avec le revêtement (44) le dispositif faisant écran.

4. Phare selon l'une des revendications précédentes,
caractérisé en ce que
la source de la lumière (12 ; 212) est disposée de façon rigide dans un support de lampe (22 ; 222), et le support de lampe (22 ; 222) peut être déplacé par l'élément de réglage (42 ; 142 ; 242) qui vient en prise sur celui-ci.

5. Phare selon les revendications 3 et 4,
caractérisé en ce que
la chape (48) est reliée rigidement au support de lampe (22).

6. Phare selon l'une des revendications 4 ou 5,
caractérisé en ce que
- le support de lampe (22) est monté de façon à pouvoir pivoter autour d'un axe (30) qui s'étend à peu près horizontalement et,
- l'élément de réglage (42) vient en prise sur le support de lampe (22) de façon excentrée par rapport à cet axe (30).

7. Phare selon l'une des revendications 4 ou 5,
caractérisé en ce que
le support de lampe (222) peut se déplacer en ligne droite entre la position pour la lumière des feux de croisement et la position pour la lumière des feux de route.

8. Phare selon l'une quelconque des revendications 4 à 7,
caractérisé en ce que
le support de lampe (22 ; 222) est mis par l'élément de réglage (42 ; 242) en appui sur une butée fixe (37 ; 237) dans la position pour la lumière des feux de croisement et/ou en appui sur une autre butée fixe (38 ; 238) dans la position pour la lumière des feux de route.

9. Phare selon la revendication 8,
caractérisé en ce qu'
on dispose entre le support de lampe (22 ; 222) et l'élément de réglage (42 ; 142 ; 242) un organe intermédiaire élastiquement déformable (40 ; 240) déformé dans au moins une position du support de la lampe (22 ; 222) de telle sorte que le support de la lampe (22 ; 222) est maintenu sous précontrainte en appui sur l'une des butées (37 ; 237 ; 38 ; 238).

10. Phare selon l'une des revendications 4 à 9,
caractérisé en ce que
l'élément de réglage (42, 142, 242)) est entraîné par un moteur électrique (60, 160, 260).

11. Phare selon l'une des revendications 10,
caractérisé en ce que
le moteur électrique (60) est accouplé au moyen d'un organe de transmission (62) articulé de façon excentrée sur son arbre (61) avec le support de lampe (22).

12. Phare selon la revendication 1,
caractérisé en ce que
- le dispositif faisant écran présente une chape (348) ne laissant pas passer la lumière, qui est mobile en même temps que la source de la lumière (312) avec au moins une ouverture (370) et une autre partie(373), transparente, fixe par rapport au réflecteur (310), partie par laquelle l'ouverture (370) de la chape (348) est recouverte dans la position qui correspond aux feux de croisement, et
- la chape (348) est disposée dans la position qui correspond aux feux de route de telle façon que son ouverture (370) est libérée.

13. Phare selon la revendication 1,
caractérisé en ce que
- le dispositif faisant écran présente deux parties (448) qui peuvent pivoter, en forme d'ailes qui sont adjacentes l'une à l'autre dans leur position correspondant à la lumière pour les feux de croisement pour former une chape allant de bout en bout, de telle sorte que soit arrêtée la lumière émise par la source de la lumière (412) vers une zone partielle du réflecteur (410), et
- il est prévu au moins une partie (444) mobile en même temps que la source de la lumière (412), grâce à laquelle les pièces en forme d'ailes (448) peuvent s'écarter l'une de l'autre pour libérer une ouverture lors du déplacement de la source de la lumière (412) dans sa position correspondant aux feux de route, ouverture à travers laquelle la lumière émise par la source de la lumière (412) peut atteindre la zone partielle du réflecteur (410).

14. Phare selon la revendication 13,
caractérisé en ce qu'
il est prévu un élément à ressort (484) au moyen duquel les parties en forme d'ailes (448) sont actionnées en direction l'une de l'autre pour former la chape.
